# FASCICULE DE BREVET EUROPEEN

(11) **EP 3 697 657 B1**
(45) Date de publication et mention de la délivrance du brevet: **04.08.2021**
(21) Numéro de dépôt: 18793368.4
(22) Date de dépôt: 11.10.2018
(51) Int. Cl.: B60W 30/10, B60W 30/16, B60W 30/18, B60W 30/095, B60W 30/09, B60W 50/00

(54) **PROCÉDÉ ET SYSTÈME D'ASSISTANCE À LA CONDUITE POUR UN VÉHICULE AUTOMOBILE À L'APPROCHE D'UNE INTERSECTION**
FAHRERASSISTENZVERFAHREN UND -SYSTEM FÜR EIN SICH AN EINE KREUZUNG ANNÄHERNDES KRAFTFAHRZEUG
DRIVING ASSISTANCE METHOD AND SYSTEM FOR A MOTOR VEHICLE APPROACHING AN INTERSECTION

(30) Priorité: 18.10.2017 FR 1759781
(43) Date de publication de la demande: 26.08.2020
(73) Titulaire: Valeo Schalter und Sensoren GmbH, 74321 Bietigheim-Bissingen (DE)
(72) Inventeur: HEITZMANN, Thomas, 94046 Créteil Cedex (FR); GARNAULT, Alexandre, 94046 Créteil Cedex (FR); BRADAI, Benazouz, 94046 Créteil Cedex (FR)
(74) Mandataire: Pothmann, Karsten
(86) Numéro de dépôt international: PCT/EP2018/077689
(87) Numéro de publication internationale: WO 2019/076719

(56) Documents cités:
- EP-A1- 3 006 294
- EP-A1- 3 118 835
- DE-A1-102015 110 239

## Description

La présente invention concerne de manière générale les véhicules automobiles, et plus précisément un procédé et un système d'assistance à la conduite d'un véhicule automobile à l'approche d'une intersection.

De nombreux systèmes d'assistance à la conduite sont aujourd'hui proposés dans le but d'améliorer les conditions de sécurité de circulation.

Parmi les fonctionnalités possibles, on peut citer notamment la régulation de vitesse ou ACC (initiales anglo-saxonnes mises pour Adaptive Cruise Control), l'arrêt et le redémarrage automatique du moteur du véhicule en fonction des conditions de trafic et/ou des signalisations (feux, stop, céder le passage...), l'assistance au maintien automatique de la trajectoire du véhicule dans sa voie de roulage comme proposée par les systèmes connus sous la terminologie anglo-saxonne de « Lane Keeping Assistance Systems, l'avertissement au conducteur de sortie de voie ou de franchissement involontaire de lignes (« Lane Departure Warning » en terminologie anglo-saxonne), l'assistance au changement de voie ou LCC (initiales anglo-saxonnes mises pour Lane Change Control), etc.

Les systèmes d'assistance à la conduite ont ainsi pour fonction générale d'alerter le conducteur d'une situation requérant sa vigilance et/ou de définir la trajectoire que doit suivre le véhicule pour arriver à une destination donnée, et permettre par suite de contrôler les organes de contrôle de la direction et de freinage du véhicule, pour que cette trajectoire soit effectivement suivie automatiquement. La trajectoire doit être comprise ici dans sa définition mathématique, c'est-à-dire comme étant l'ensemble des positions successives qui doivent être occupées par le véhicule au cours du temps. Ainsi, les systèmes d'assistance à la conduite doivent définir non seulement le chemin à emprunter, mais aussi le profil de vitesses à respecter. Pour ce faire, ils utilisent de nombreuses informations sur l'environnement immédiat du véhicule (présence d'obstacles tels que des piétons, de cycles ou autres véhicules motorisés, détection de panneaux de signalisation, configuration routière...), en provenance d'un ou plusieurs moyens de détection tels que caméras, radars, lidars, équipant le véhicule, ainsi que des informations liées au véhicule lui-même, telles que sa vitesse, son accélération, sa position donnée par exemple par un système de navigation type GPS.

On s'intéresse dans la suite au cas particulier de la conduite en milieu urbain, et notamment l'assistance à la conduite pour le passage d'une intersection. Un système d'assistance classique à la conduite identifie généralement, pour chaque situation routière, les règles de priorités de conduite qui s'appliquent, à partir notamment de la détection de l'état des feux tricolores, et/ou des panneaux de signalisation tels que des panneaux annonçant un croisement ou un « cédez-le-passage », et/ou des lignes de marquage au sol, et/ou de la localisation du véhicule automobile sur une carte géographique haute définition répertoriant les différentes intersections avec leurs règles de priorités associées. De tels systèmes sont décrits par exemple dans les documents EP3118835 A1, EP3006294 A1 et DE102015110239 A1.

Ainsi, pour un véhicule à automatisation conditionnelle ou complète (dit de niveau 3 ou supérieur selon la classification donnée par le Comité SAE, Acronyme anglo-saxon mis pour Society of Automotive Engineers), il est prévu d'équiper le véhicule d'une carte géographique haute définition qui est censé donner une localisation précise des intersections présentes sur la route empruntée. Certaines méthodes ont été développées pour réaligner correctement la position d'un véhicule sur une carte géographique embarquée, en utilisant la détection de repères statiques situés sur la route à l'aide de différents capteurs embarqués, et en corrélant les repères détectés avec les repères présents sur la carte géographique. Les véhicules automobiles à conduite assistée dits de niveau 2 ne disposent quant à eux d'aucune carte géographique haute définition embarquée de sorte qu'ils doivent détecter, à l'aide de capteurs embarqués, la présence des panneaux de signalisation et/ou des lignes de marquage pour pouvoir définir les règles de priorités qui s'appliquent à une intersection. A noter que dans certains cas, la règle de priorité est au contraire liée à l'absence de panneaux de signalisation. C'est le cas par exemple en France où l'on applique systématiquement la règle de priorité à droite lorsqu'aucun panneau n'est présent, ou en cas de panne de feux tricolores.

Dans tous les cas, il est possible d'élaborer la trajectoire à suivre, en particulier les arrêts et redémarrages du véhicule automobile en conduite autonome à partir de ces règles de priorités.

Dans certaines situations, des conducteurs habitués à une conduite sportive vont considérer que les trajectoires planifiées par les systèmes existant ne correspondent pas à ce qu'ils auraient effectué eux-mêmes, ce qui peut leur donner une impression globale d'insécurité, ou de défiance par rapport au système.

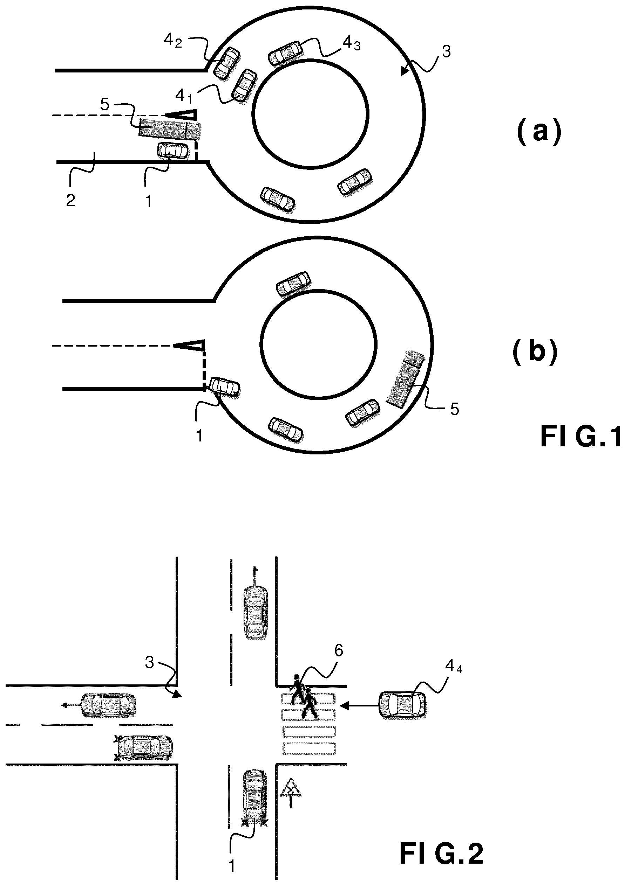

Les figures 1 à 3 illustrent des exemples de comportement de systèmes d'assistance à la conduite actuels pour certaines configurations routières classiques :
Dans le cas de la figure 1, un véhicule automobile 1 en mode de fonctionnement autonome et équipé d'un système classique d'assistance à la conduite se déplace sur une avenue 2 à l'approche d'une intersection 3 de type sens giratoire. D'autres véhicules sont déjà engagés sur ce sens giratoire 3, en particulier les trois véhicules 4₁, 4₂ et 4₃, qui arrivent sur la gauche du véhicule automobile 1, et qui ont, conformément aux règles de conduite françaises, la priorité sur le véhicule automobile 1. Un camion 5 est également illustré sur la gauche et au même niveau que le véhicule automobile 1. On suppose que ce camion 5 ne marque pas l'arrêt et s'engage sur le sens giratoire 3. Dans cette situation particulière, un système d'assistance classique va repérer l'arrivée sur le sens giratoire, par exemple en détectant un panneau de signalisation dédié (non représenté), et/ou une ligne de marquage au sol représentative d'un céder le passage, puis privilégier la sécurité en imposant au véhicule automobile 1 de marquer l'arrêt avant d'entrer sur le sens giratoire 3 (figure 1(a)). Le véhicule automobile 1 ne s'engagera sur le sens giratoire que lorsque le système d'assistance jugera qu'il n'y a plus de véhicule tiers dont la position sur le sens giratoire 3 présente un risque pour le véhicule automobile 1 (figure 1(b)). Typiquement, dans ce cas de figure, il serait souhaitable d'autoriser un mode de conduite plus agressif, avec une prise de risque certes plus élevée mais se rapprochant plus du comportement d'un conducteur qui opterait pour s'engager également sur le sens giratoire en profitant du passage du camion 5, le camion 5 le protégeant alors des autres véhicules 4₁, 4₂ et 4₃.

Dans le cas de la figure 2, on suppose que le véhicule automobile 1 est à l'approche d'une intersection 3 de type croisement dit « en croix ». D'autres véhicules sont également dans la zone du croisement, en particulier le véhicule 4₄ qui arrive également au niveau du croisement, sur la droite du véhicule automobile 1, et qui a, conformément aux règles de conduite françaises, la priorité sur le véhicule automobile 1. Des piétons 6 sont également illustrés en train de traverser sur un passage piéton au-devant du véhicule tiers 4₄. Dans cette situation particulière, un système d'assistance classique privilégie la sécurité en imposant au véhicule automobile 1 de marquer l'arrêt, et de laisser passer le véhicule tiers 4₄ (figure 2). Le véhicule automobile 1 ne redémarrera que lorsque le système d'assistance jugera qu'il n'y a plus de véhicule tiers dont la position présente un risque pour le véhicule automobile 1. Ici encore, il serait souhaitable d'autoriser un mode de conduite se rapprochant plus du comportement d'un conducteur qui opterait pour passer le croisement en profitant du passage des piétons 6, compte-tenu du fait que le véhicule tiers 4₄ doit également s'arrêter.

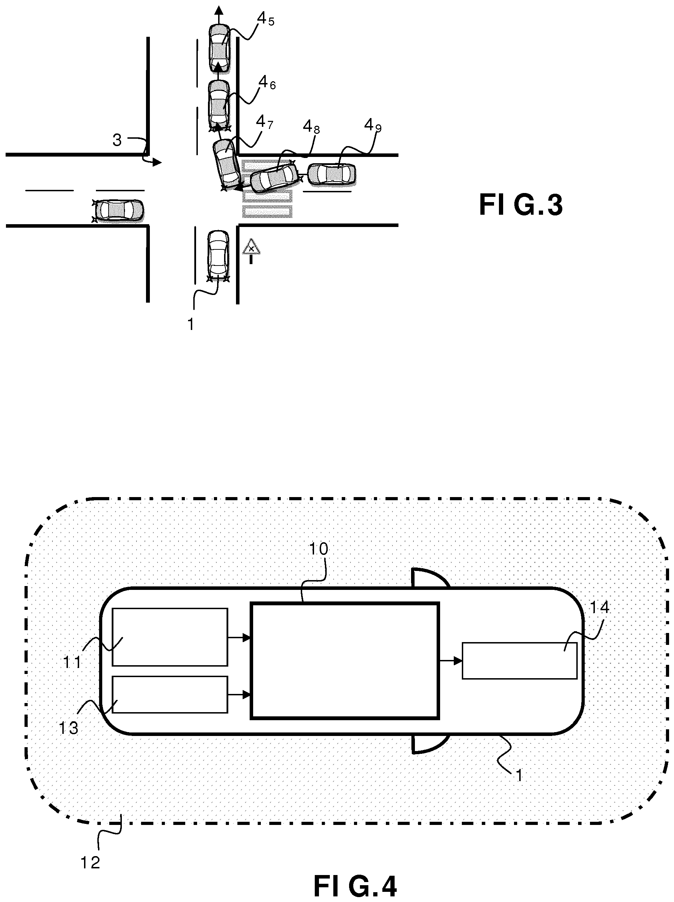

Dans le cas de la figure 3, on suppose que le véhicule automobile 1 est à l'approche d'une intersection 3 de type croisement « en croix » et souhaite tourner sur la rue de gauche. D'autres véhicules sont également dans la zone du croisement, en particulier les véhicule 4₅ à 4₇ qui sont à l'arrêt au-delà du croisement, et les véhicules 4₈ à 4₉ qui arrivent également au niveau du croisement, sur la droite du véhicule automobile 1, et qui ont, conformément aux règles de conduite françaises, la priorité sur le véhicule automobile 1. Un système d'assistance classique impose ici au véhicule automobile 1 de marquer l'arrêt pour laisser passer les véhicule tiers 4₈ à 4₉, alors même que ces derniers sont bloqués par le véhicule 4₇. Ici encore, il serait souhaitable d'autoriser un mode de conduite se rapprochant plus du comportement d'un conducteur qui opterait, en analysant la situation globale, pour tourner à gauche sans marquer d'arrêt.

La présente invention a pour but de pallier les limitations des systèmes d'assistance à la conduite d'un véhicule automobile à l'approche d'une intersection jusqu'ici proposés.

Pour ce faire, l'invention a pour objet un procédé d'assistance à la conduite d'un véhicule automobile à l'approche d'une intersection, comportant les étapes suivantes:
- une étape de détection, depuis le véhicule automobile, d'une intersection au-devant du véhicule automobile;
- une étape de détection, depuis le véhicule automobile, d'objets présents dans le voisinage dudit véhicule automobile et de ladite intersection; et
- une étape de commande d'un arrêt du véhicule automobile avant passage de l'intersection, apte à être déclenchée en fonction du type de l'intersection détectée et de la détection d'au moins un premier objet mobile qui suit une trajectoire estimée interceptant, au bout d'une durée jusqu'à collision estimée, une trajectoire estimée suivie par ledit véhicule automobile lors de son passage de l'intersection,
dans lequel le déclenchement de l'étape de commande d'un arrêt peut être inhibé en cas de détection d'au moins un deuxième objet qui suit une trajectoire estimée interceptant une portion de la trajectoire estimée suivie par le premier objet mobile pendant une durée supérieure à ladite durée jusqu'à collision estimée.

L'invention a également pour objet un système d'assistance à la conduite d'un véhicule automobile à l'approche d'une intersection, comportant un module de traitement embarqué sur ledit véhicule automobile et apte à :
- détecter une intersection au-devant du véhicule automobile;
- détecter des objets présents dans le voisinage dudit véhicule automobile et de ladite intersection; et
- déclencher une commande d'arrêt du véhicule automobile avant passage de l'intersection, en fonction du type de l'intersection détectée et de la détection d'au moins un premier objet mobile qui suit une trajectoire estimée interceptant, au bout d'une durée jusqu'à collision estimée, une trajectoire estimée suivie par ledit véhicule automobile lors de son passage de l'intersection,
le déclenchement de la commande d'un arrêt pouvant être inhibé en cas de détection d'au moins un deuxième objet qui suit une trajectoire estimée interceptant une portion de la trajectoire estimée suivie par le premier objet mobile pendant une durée supérieure à ladite durée jusqu'à collision estimée.

Selon d'autres aspects possibles, pris de façon isolée ou en combinaison :
- ledit module de traitement peut être apte à détecter une intersection au-devant du véhicule automobile à partir d'une carte géographique haute définition embarquée et d'une position courante du véhicule automobile;
- ledit module de traitement peut être apte à détecter une intersection au-devant du véhicule automobile par détection d'un panneau de signalisation associé à ladite intersection et/ou de lignes de marquage au sol, à partir du traitement d'images capturée par une caméra embarquée;
- ledit module de traitement est de préférence apte à détecter des objets à partir de capteurs embarqués pour observer le voisinage dans des zones à l'avant et sur les côtés dudit véhicule automobile ;
- lesdits capteurs embarqués sont par exemple des caméras et/ou des radars et/ou des lidars.

L'invention et les différents avantages qu'elle procure seront mieux compris au vu de la description suivante, faite en référence aux figures annexées, dans lesquelles :
- les figures 1 à 3 représentent, en vue de dessus, trois exemples de gestion du passage d'une intersection par un système d'assistance selon l'art antérieur ;
- la figure 4 représente, sous forme de synoptique simplifié, une architecture générale possible d'un système d'assistance équipant un véhicule autonome et susceptible d'implémenter le procédé selon l'invention ;
- les figures 5 à 7 illustrent, en vue de dessus, la gestion du passage d'une intersection par un système d'assistance selon l'invention à titre comparatif pour les trois exemples des figures 1 à 3.

Dans la suite de la description, et à moins qu'il n'en soit disposé autrement, les éléments communs à l'ensemble des figures portent les mêmes références.

La figure 4 illustre de façon simplifiée un véhicule autonome 1 équipé d'un système embarqué d'assistance à la conduite comportant un module 10 de traitement apte à planifier la trajectoire à suivre par le véhicule automobile 1, en particulier à commander des arrêts du véhicule lorsque la situation l'impose. Dans l'exemple non limitatif représenté sur cette figure, le système coopère classiquement avec d'autres éléments présents sur le véhicule 1, notamment, un ensemble de capteurs (caméras, radars, lidars...), regroupés schématiquement sur la figure 1 sous la référence 11, bien que situés dans la réalité à différents endroits sur le véhicule 1 de façon à permettre la surveillance de différentes zones dans l'environnement proche 12 entourant le véhicule automobile 1, en vue notamment de détecter la présence d'obstacles tels que des piétons, de cycles ou autres véhicules motorisés, la nature des panneaux de signalisation, la configuration routière, en particulier le type de route....Les zones de détection auxquelles on s'intéresse dans la suite sont celles situées au-devant et sur les côtés du véhicule automobile 1.

Le système d'assistance utilise en outre classiquement les informations liées au véhicule 1 lui-même, telles que sa vitesse, son accélération, et sa position sur une carte. Ces informations sont issues de différents capteurs et d'un système de navigation type GPS et/ou d'une carte géographique haute définition embarquée, globalement regroupés par souci de simplification, sous la référence 13 sur la figure 1.

Le système d'assistance coopère enfin avec un système de contrôle de la colonne de direction du véhicule et un système de freinage, globalement représenté par la référence 14. En particulier, le véhicule automobile 1 est contrôlé de façon classique pour suivre la trajectoire T déterminée par le module 10 de traitement.

Dans le cadre de l'assistance à la conduite du véhicule automobile 1 à l'approche d'une intersection, le module 10 de traitement embarqué est apte à détecter une intersection au-devant du véhicule 1 et vers laquelle le véhicule automobile 1 se dirige.

Comme cela a été indiqué précédemment, cette détection peut être faite notamment en détectant un panneau de signalisation dédié à l'intersection et/ou des lignes particulières de marquage au sol, par exemple par traitement d'images capturées par une caméra embarquée, et/ou en localisant le véhicule automobile 1 sur une carte géographique haute définition embarquée répertoriant les différentes intersections avec leurs règles de priorités associées.

Le module 10 est en outre apte à détecter des objets présents dans le voisinage du véhicule automobile 1 et de l'intersection 3 détectée. La détection d'objets peut se faire par tout moyen classique. La détection d'objets comprend également, lorsque l'objet détecté est mobile, l'estimation de la trajectoire suivie par chaque objet détecté, et l'estimation d'une durée jusqu'à collision (durée s'écoulant jusqu'à une potentielle collision entre le véhicule automobile 1 et l'objet détecté). On verra par la suite que, pour la gestion du passage d'une intersection, il est suffisant de détecter les objets présents à l'avant et sur les côtés du véhicule 1.

En fonction du type de l'intersection 3 détectée (sens giratoire, croisement, rond-point) et de la détection d'au moins un premier objet mobile qui suit une trajectoire estimée interceptant, au bout d'une durée jusqu'à collision estimée, une trajectoire estimée suivie par le véhicule automobile 1 lors de son passage de l'intersection, le module 10 peut être amené à déclencher une commande d'arrêt du véhicule automobile 1 avant qu'il ne passe l'intersection. Une telle commande sera en effet déclenchée si la durée jusqu'à collision estimée est inférieure à un certain seuil.

Les trois étapes précédentes, allant jusqu'au déclenchement de l'arrêt du véhicule automobile 1 avant son passage de l'intersection, sont typiquement celles qui seraient implémentées classiquement :
- dans la configuration routière illustrée sur la figure 1 partie (a) : le système détecte d'une part, l'approche du sens giratoire 3, d'autre part, des véhicules 4₁, 4₂ et 4₃ déjà présents à sa gauche sur le sens giratoire 3 et dont les trajectoires vont intersecter la trajectoire du véhicule automobile 1 (si ce dernier ne marque pas l'arrêt), et impose en conséquence l'arrêt du véhicule 1 jusqu'à ce que le passage sur le sens giratoire soit dégagé ;
- dans la configuration routière illustrée sur la figure 2 : le système détecte d'une part, l'approche de l'intersection de type croisement 3 (avec application de la priorité pour les véhicule venant de la droite), d'autre part, la présence du véhicule 4₄ qui arrive également à l'approche de l'intersection et dont la trajectoire va intersecter la trajectoire du véhicule automobile 1 (si ce dernier ne marquait pas l'arrêt), et impose en conséquence l'arrêt du véhicule 1 jusqu'à ce que le véhicule 4₄ soit passé ;
- dans la configuration routière illustrée sur la figure 3 : le système détecte d'une part, l'approche de l'intersection de type croisement 3 (avec application de la priorité pour les véhicule venant de la droite), d'autre part, le véhicule 4₈ (voire le véhicule 4₉) qui arrive également à l'approche de l'intersection et dont la trajectoire va intersecter la trajectoire du véhicule automobile 1 (si ce dernier ne marquait pas l'arrêt), et impose en conséquence l'arrêt du véhicule 1 jusqu'à ce que le véhicule 4₈ soit passé.

De manière différente, le module 10 de traitement du système d'assistance selon l'invention va pouvoir prendre en compte toute détection d'un autre objet présent qui est susceptible de bloquer le passage du premier objet suffisamment longtemps (compte tenu des vitesses de déplacement des objets détectés et du véhicule 1 et des distances restant à parcourir jusqu'à l'intersection) pour décider d'autoriser le passage du véhicule 1, en inhibant de ce fait le déclenchement de la commande d'arrêt. En d'autres termes, le système d'assistance selon l'invention est apte à considérer que cet autre objet détecté constitue une protection ou un bouclier pour le véhicule automobile 1, ce qui permet d'autoriser le véhicule 1 à passer l'intersection, en toute sécurité, sans marquer d'arrêt.

Un tel autre objet peut être défini comme tout objet détecté dont la trajectoire estimée intercepte une portion de la trajectoire estimée suivie par l'objet considéré initialement comme étant un danger pour le véhicule automobile 1 (le premier objet), pendant une durée supérieure à ladite durée jusqu'à collision estimée. Ainsi et à titre d'exemples non limitatifs:

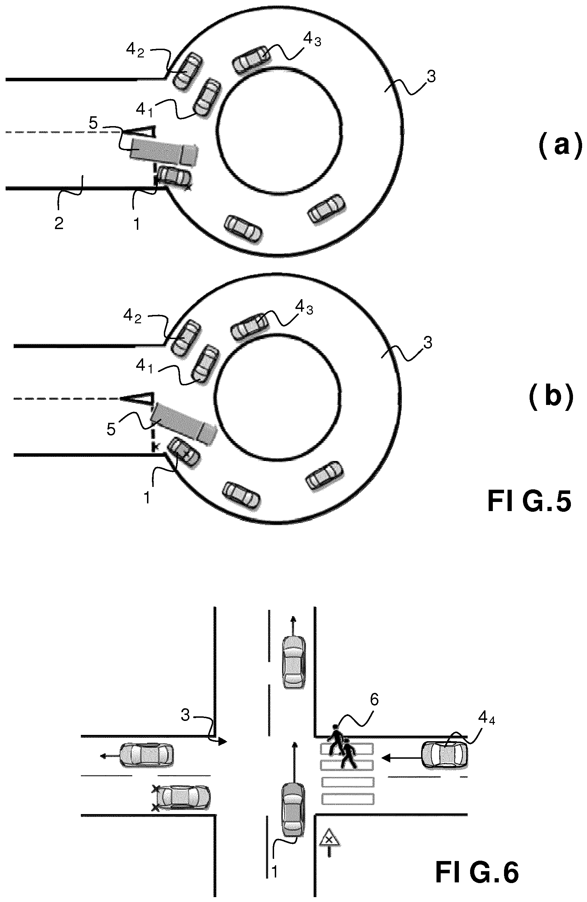

- sur la figure 5 qui montre, à titre comparatif, le comportement du système d'assistance à la conduite selon l'invention pour une configuration routière similaire à celle illustrée sur la figure 1 : le système va détecter la présence du camion 5 sur le flanc gauche du véhicule automobile 1, et considérer que ce camion 5 suit une trajectoire estimée qui protège le véhicule automobile 1 des véhicules 4₁, 4₂, 4₃ pendant une durée suffisamment longue Le véhicule 1 va pouvoir s'engager sur le sens giratoire 3 sans marquer l'arrêt (voir parties (a) et (b) de la figure 5);
- sur la figure 6 qui montre, à titre comparatif, le comportement du système d'assistance à la conduite selon l'invention pour une configuration routière similaire à celle illustrée sur la figure 2 : le système va détecter la présence des piétons 6 traversant sur le passage piétons à l'avant du véhicule 4₄, et considérer que ces piétons suivent une trajectoire estimée qui protège le véhicule automobile 1 du véhicule 4₄ Le véhicule 1 va pouvoir s'engager sur le croisement 3 sans marquer l'arrêt ;

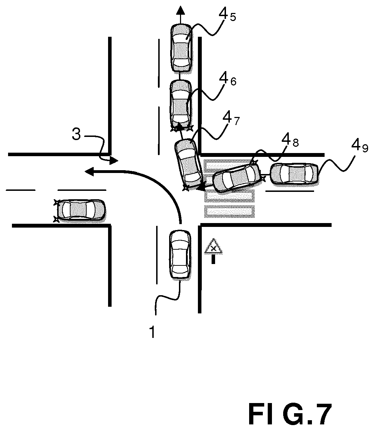

- sur la figure 7 qui montre, à titre comparatif, le comportement du système d'assistance à la conduite selon l'invention pour une configuration routière similaire à celle illustrée sur la figure 3 : le système va détecter la présence du véhicule 4₇ arrêté et bloquant de ce fait le passage des véhicules 4₈ et 4₉ à l'avant du véhicule 4₄, et considérer que ce véhicule 4₇ protège le véhicule automobile 1 des véhicules 4₈ et 4₉ dans sa manœuvre pour tourner à gauche Le véhicule 1 va pouvoir s'engager sur le croisement 3 sans marquer l'arrêt.

Grâce à la prise en compte d'objets tels que des piétons ou des véhicules autres que ceux qui imposeraient dans certains cas à un système d'assistance classique de commander l'arrêt du véhicule automobile 1 avant passage d'une intersection, compte tenu des règles de priorités associées à cette intersection et à la situation rencontrée, le système selon l'invention peut identifier les cas où un arrêt n'est en fait pas justifié, et permettre une gestion proche d'un comportement humain.

## Revendications

1. Procédé d'assistance à la conduite d'un véhicule automobile (1) à l'approche d'une intersection, comportant les étapes suivantes:
- une étape de détection, depuis le véhicule automobile (1), d'une intersection (3) au-devant du véhicule automobile (1);
- une étape de détection, depuis le véhicule automobile (1), d'objets présents dans le voisinage dudit véhicule automobile (1) et de ladite intersection (3); et
- une étape de commande d'un arrêt du véhicule automobile (1) avant passage de l'intersection (3), apte à être déclenchée en fonction du type de l'intersection (3) détectée et de la détection d'au moins un premier objet mobile (4₁, 4₂, 4₃ ; 4₄ ; 4₈) qui suit une trajectoire estimée interceptant, au bout d'une durée jusqu'à collision estimée, une trajectoire estimée suivie par ledit véhicule automobile (1) lors de son passage de l'intersection,
**caractérisé en ce que** le déclenchement de l'étape de commande d'un arrêt peut être inhibé en cas de détection d'au moins un deuxième objet (5 ; 6) qui suit une trajectoire estimée interceptant une portion de la trajectoire estimée suivie par le premier objet mobile (4₁, 4₂, 4₃ ; 4₄ ; 4₈) pendant une durée supérieure à ladite durée jusqu'à collision estimée.

2. Système d'assistance à la conduite d'un véhicule automobile (1) à l'approche d'une intersection, comportant un module (10) de traitement embarqué sur ledit véhicule automobile (1) et apte à :
- détecter une intersection (3) au-devant du véhicule automobile (1);
- détecter des objets présents dans le voisinage dudit véhicule automobile (1) et de ladite intersection (3); et
- déclencher une commande d'arrêt du véhicule automobile (1) avant passage de l'intersection (3), en fonction du type de l'intersection (3) détectée et de la détection d'au moins un premier objet mobile (4₁, 4₂, 4₃ ; 4₄ ; 4₈) qui suit une trajectoire estimée interceptant, au bout d'une durée jusqu'à collision estimée, une trajectoire estimée suivie par ledit véhicule automobile (1) lors de son passage de l'intersection,
**caractérisé en ce que** le déclenchement de la commande d'un arrêt peut être inhibé en cas de détection d'au moins un deuxième objet (5 ; 6) qui suit une trajectoire estimée interceptant une portion de la trajectoire estimée suivie par le premier objet mobile (4₁, 4₂, 4₃ ; 4₄ ; 4₈) pendant une durée supérieure à ladite durée jusqu'à collision estimée.

3. Système selon la revendication 2, **caractérisé en ce que** ledit module (10) de traitement est apte à détecter une intersection (3) au-devant du véhicule automobile (1) à partir d'une carte géographique haute définition (13) embarquée et d'une position courante du véhicule automobile (1).

4. Système selon la revendication 2, **caractérisé en ce que** ledit module (10) de traitement est apte à détecter une intersection (3) au-devant du véhicule automobile (1) par détection d'un panneau de signalisation associé à ladite intersection et/ou de lignes de marquage au sol, à partir du traitement d'images capturée par une caméra (11) embarquée.

5. Système selon l'une quelconque des revendications 2 à 4, **caractérisé en ce que** ledit module (10) de traitement est apte à détecter des objets à partir de capteurs embarqués pour observer le voisinage dans des zones à l'avant et sur les côtés dudit véhicule automobile (1).

6. Système selon la revendication 5, **caractérisé en ce que** lesdits capteurs embarqués sont des caméras et/ou des radars et/ou des lidars.

## Patentansprüche

1. Fahrassistenzverfahren für ein Kraftfahrzeug (1), das sich einer Kreuzung nähert, die folgenden Schritte umfassend:
- einen Schritt des Erkennens, vom Kraftfahrzeug (1) aus, einer Kreuzung (3) vor dem Kraftfahrzeug (1) ;
- einen Schritt des Erkennens, vom Kraftfahrzeug (1) aus, von in der Umgebung des Kraftfahrzeugs (1) und der Kreuzung (3) vorhandenen Objekten; und
- einen Schritt des Anweisens eines Anhaltens des Kraftfahrzeugs (1) vor dem Passieren der Kreuzung (3), der in Abhängigkeit vom Typ der erkannten Kreuzung (3) und von der Erkennung wenigstens eines ersten beweglichen Objekts (4₁, 4₂, 4₃; 4₄; 4₈) ausgelöst werden kann, welches einer geschätzten Trajektorie folgt, die am Ende einer geschätzten Dauer bis zu einer Kollision eine geschätzte Trajektorie abschneidet, der das Kraftfahrzeug (1) beim Passieren der Kreuzung folgt,
**dadurch gekennzeichnet, dass**
die Auslösung des Schrittes des Anweisens eines Anhaltens im Fall einer Erkennung wenigstens eines zweiten Objekts (5; 6) verhindert werden kann, welches einer geschätzten Trajektorie folgt, die einen Abschnitt der geschätzten Trajektorie, der das erste bewegliche Objekt (4₁, 4₂, 4₃; 4₄; 4₈) folgt, während einer Dauer abschneidet, die länger als die geschätzte Dauer bis zu einer Kollision ist.

2. Fahrassistenzsystem für ein Kraftfahrzeug (1), das sich einer Kreuzung nähert, welches ein Verarbeitungsmodul (10) umfasst, das sich an Bord des Kraftfahrzeugs (1) befindet und in der Lage ist:
- eine Kreuzung (3) vor dem Kraftfahrzeug (1) zu erkennen;
- Objekte zu erkennen, die in der Umgebung des Kraftfahrzeugs (1) und der Kreuzung (3) vorhanden sind; und
- eine Anweisung zum Anhalten des Kraftfahrzeugs (1) vor dem Passieren der Kreuzung (3) in Abhängigkeit vom Typ der erkannten Kreuzung (3) und von der Erkennung wenigstens eines ersten beweglichen Objekts (4₁, 4₂, 4₃; 4₄; 4₈) auszulösen, welches einer geschätzten Trajektorie folgt, die am Ende einer geschätzten Dauer bis zu einer Kollision eine geschätzte Trajektorie abschneidet, der das Kraftfahrzeug (1) beim Passieren der Kreuzung folgt,
**dadurch gekennzeichnet, dass**
die Auslösung der Anweisung zum Anhalten im Fall einer Erkennung wenigstens eines zweiten Objekts (5; 6) verhindert werden kann, welches einer geschätzten Trajektorie folgt, die einen Abschnitt der geschätzten Trajektorie, der das erste bewegliche Objekt (4₁, 4₂, 4₃; 4₄; 4₈) folgt, während einer Dauer abschneidet, die länger als die geschätzte Dauer bis zu einer Kollision ist.

3. System nach Anspruch 2, **dadurch gekennzeichnet, dass** das Verarbeitungsmodul (10) in der Lage ist, eine Kreuzung (3) vor dem Kraftfahrzeug (1) anhand einer an Bord befindlichen hochauflösenden geographischen Karte (13) und einer aktuellen Position des Kraftfahrzeugs (1) zu erkennen.

4. System nach Anspruch 2, **dadurch gekennzeichnet, dass** das Verarbeitungsmodul (10) in der Lage ist, eine Kreuzung (3) vor dem Kraftfahrzeug (1) durch Erkennung eines der Kreuzung zugeordneten Verkehrszeichens und/oder von Markierungslinien am Boden anhand der Verarbeitung von Bildern, die von einer Bordkamera (11) aufgenommen wurden, zu erkennen.

5. System nach einem der Ansprüche 2 bis 4, **dadurch gekennzeichnet, dass** das Verarbeitungsmodul (10) in der Lage ist, Objekte anhand von bordeigenen Sensoren zum Beobachten der Umgebung in Bereichen vor und seitlich von dem Kraftfahrzeug (1) zu erkennen.

6. System nach Anspruch 5, **dadurch gekennzeichnet, dass** die bordeigenen Sensoren Kameras und/oder Radare und/oder Lidare sind.

## Claims

1. Method for assisting with driving a motor vehicle (1) on the approach to an intersection, comprising the following steps:
- a step of detecting, from the motor vehicle (1), an intersection (3) in front of the motor vehicle (1);
- a step of detecting, from the motor vehicle (1), objects present in the vicinity of said motor vehicle (1) and of said intersection (3); and
- a step of commanding the motor vehicle (1) to stop before the intersection (3) is crossed, which is able to be activated depending on the type of detected intersection (3) and on detection of at least one first moving object (4₁, 4₂, 4₃; 4₄; 4₈) that is following an estimated path that intercepts, at the end of an estimated time to collision, an estimated path to be followed by said motor vehicle (1) when it crosses the intersection,
**characterized in that**
the activation of the step of commanding to stop may be inhibited in case of detection of at least one second object (5; 6) that is following an estimated path that intercepts a segment of the estimated path followed by the first moving object (4₁, 4₂, 4₃; 4₄; 4₈) for a time longer than said estimated time to collision.

2. System for assisting with driving a motor vehicle (1) on the approach to an intersection, comprising a processing module (10) located on board said motor vehicle (1) and able to:
- detect an intersection (3) in front of the motor vehicle (1) ;
- detect objects present in the vicinity of said motor vehicle (1) and of said intersection (3); and
- activate a command to stop the motor vehicle (1) before the intersection (3) is crossed, depending on the type of detected intersection (3) and on detection of at least one first moving object (4₁, 4₂, 4₃; 4₄; 4₈) that is following an estimated path that intercepts, at the end of an estimated time to collision, an estimated path to be followed by said motor vehicle (1) when it crosses the intersection,
**characterized in that**
the activation of the command to stop may be inhibited in case of detection of at least one second object (5; 6) that is following an estimated path that intercepts a segment of the estimated path followed by the first moving object (4₁, 4₂, 4₃; 4₄; 4₈) for a time longer than said estimated time to collision.

3. System according to Claim 2, **characterized in that** said processing module (10) is able to detect an intersection (3) in front of the motor vehicle (1) using a high-definition on-board geographic map (13) and a current position of the motor vehicle (1).

4. System according to Claim 2, **characterized in that** said processing module (10) is able to detect an intersection (3) in front of the motor vehicle (1) by detecting a traffic sign associated with said intersection and/or marking lines on the ground, based on processing of images captured by an on-board camera (11) .

5. System according to any one of Claims 2 to 4, **characterized in that** said processing module (10) is able to detect objects using on-board sensors for observing the vicinity in regions in front and to the side of said motor vehicle (1).

6. System according to Claim 5, **characterized in that** said on-board sensors are cameras and/or radars and/or lidars.
